# EUROPEAN PATENT SPECIFICATION

(11) **EP 3 705 742 B1**
(45) Date of publication and mention of the grant of the patent: **27.10.2021**
(21) Application number: 20161045.8
(22) Date of filing: 04.03.2020
(51) Int. Cl.: F16C 7/02, B33Y 80/00

(54) **CONNECTING ROD FOR INTERNAL COMBUSTION ENGINE AND METHOD FOR PRODUCING SAID CONNECTING ROD**
PLEUELSTANGE FÜR VERBRENNUNGSMOTOR UND HERSTELLUNGSVERFAHREN DER PLEUELSTANGE
BIELLE POUR MOTEUR À COMBUSTION INTERNE ET MÉTHODE DE PRODUCTION DE LADITE BIELLE

(30) Priority: 04.03.2019 IT 201900003111
(43) Date of publication of application: 09.09.2020
(73) Proprietor: Streparava S.p.A. Con Socio Unico, 25030 Adro (IT)
(72) Inventor: CECCHEL, Silvia, 25030 ADRO (BS) (IT); FERRARIO, Davide, 25030 ADRO (BS) (IT); MEGA, Francesco, 25030 ADRO (BS) (IT)
(74) Representative: Cicchetti, Angelo

(56) References cited:
- DE-A1-102017 120 418
- FR-A1- 3 062 438
- US-A1- 2018 216 658

## Description

### CROSS-REFERENCE TO RELATED APPLICATIONS

This patent application claims priority from Italian patent application no. 102019000003111 filed on 4/03/2019.

### TECHNICAL FIELD

The present invention relates to a connecting rod for an internal combustion engine, said internal combustion engine, and a method for producing said connecting rod.

### BACKGROUND ART

An internal combustion engine comprises, *inter alia,* a cylinder, a piston housed within it, a connecting rod/crank system, and a drive shaft.

The connecting rod/crank system comprises a connecting rod and a crank connected together. In addition, the crank is connected to the drive shaft and the connecting rod is connected to the piston.

The connecting rod has a big end which connects to the crank; a small end which is connected to the piston; and a shank which connects the big end to the piston and extends between them.

Generally, connecting rods are built by forging an enbloc and, subsequently, the openings in the small end and in the big end are obtained from the enbloc.

In addition, in some cases, a cooling duct is obtained within the connecting rod after the forging step through subsequent processing. In other words, after the connecting rod has been forged, a through hole that develops within the shank and connects the opening of the big end to the opening of the small end is obtained through processing; in this way a lubrication and cooling liquid can flow inside the connecting rod from the big end to the small end. This liquid cools and lubricates the components connected to the big end and the small end of the connecting rod.

DE 10 2017 120418 A1 discloses a connecting rod for an internal combustion engine, comprising two connecting rod eyes and a connecting rod shaft that connects the two connecting rod eyes, the connecting rod being manufactured by means of a generic manufacturing process in order to achieve a load-oriented design of the connecting rod, the connecting rod having a structural or hollow structure.

US 2018/0216658 A1 discloses a lightweight connecting rod with tailored stiffness. In particular, the lightweight connecting rod has one or more of: hollow regions, lattice regions, or weight reduction apertures.

FR 3062438A1 discloses a connecting rod comprising an intermediate body of generally elongated shape and connected at its longitudinal ends to connecting heads comprising orifices whose axes are substantially parallel.

A drawback of the prior art is that these connecting rods are heavy.

### DISCLOSURE OF INVENTION

An object of the present invention is to obtain a connecting rod that reduces at least one drawback of the prior art.

According to the present invention, a connecting rod for an internal combustion engine is obtained; the connecting rod comprises a small end, a big end and a shank assembly which connects the small end to the big end and develops between the small end and the big end; wherein the shank assembly comprises a first shank and a second shank which are preferably symmetrical with respect to a reference plane that extends from the small end to the big end; the first and the second shanks are housed prevalently in a respective plane that is parallel to the reference plane; the shank assembly comprises a branch assembly which connects the first and the second shanks together and extends in a direction transverse to the plane; the first and the second shanks are in contact via the branch assembly at least in a point interposed in a position different from the points where the first and the second shanks are in contact with the small end and with the big end; wherein each first and second shank comprise a first and a second portion, the first portion is defined by a single body and is connected on one side to the small end and on the other side to the second portion; the connecting road being characterized in that each second portion comprises three parts, namely two outer parts and one central part, which are connected on one side to the first portion; the central parts of the first shank and of the second shank are connected together along a first portion of the plane.

Thanks to the present invention, the connecting rod has a high stress and strain strength with a low weight. In other words, with the same stress and strain strength, the connecting rod has a lower weight compared to the prior art, or with the same weight it has a stress and strain strength greater than the prior art.

According to a preferred embodiment of the present invention, at least the shank assembly and the small end are obtained as an enbloc via an additive manufacturing process, preferably of the laser or electron-beam powder-bed type or of the laser or electron-beam powder-jet type.

According to another preferred embodiment of the present invention, the connecting rod comprises at least one lubrication and/or cooling duct for the first and/or the second shank; the at least one duct is obtained in the first and/or the second shank, respectively, and traverses it from the small end to the big end; preferably, the at least one lubrication duct being obtained during the manufacture of the connecting rod jointly with a step of forming of the connecting rod, in particular being obtained jointly with the production of the shank assembly during the additive manufacturing process.

The at least one duct can have a rectilinear shape and traverse the shank from the small end to the big end along the shortest possible path, or it can have a rectilinear shape but traverses the shank from the small end to the big end along a transverse path, so as to have a longer path with respect to the shortest possible path, or the at least one duct can have a non-rectilinear shape, in particular a tortuous shape, with numerous curved portions, and preferably traverses the respective shank along one of the side portions.

According to a preferred but not limiting embodiment of the present invention, the connecting rod comprises at least one lubrication and/or cooling duct for the first shank and at least another lubrication and/or cooling duct for the second shank.

The ducts described herein are all lubrication and/or cooling ducts.

According to another preferred embodiment of the present invention, each outer part of the first shank is joined, preferably connected and in contact, to the respective outer part of the second shank along a second portion of the plane which has aa dimension smaller than the first portion of the plane, preferably the first and the second portion of the plane partially overlap.

According to another preferred embodiment of the present invention, each outer part of the first shank joint, preferably connected and in contact, to the respective outer part of the second shank divides into two parts along a third portion of the plane, which has a dimension smaller than the second portion of the plane and preferably overlap to it.

According to another preferred embodiment of the present invention, wherein each first and second shank comprise a third portion comprising a first sub-portion, wherein it is formed by a single body, and a second sub-portion wherein it comprises a central body and the two branchings, and wherein the central body and the two branchings are connected on one side to the single body and on the other side to the big end of the connecting rod; wherein preferably the third portions of the first and second shanks are separate from one another.

Another object of the present invention is to obtain an internal combustion engine that reduces the drawbacks of the prior art.

According to the present invention, and internal combustion engine is obtained, comprising:
- a cylinder;
- a piston housed within the cylinder;
- a connecting rod/crank system; and
- a drive shaft;
- the connecting rod/crank system comprising a connecting rod and a crank connected together, the crank being connected to the drive shaft, and the connecting rod being connected to the piston, the connecting rod being obtained according to any one of Claims 1 to 9.

Another object of the present invention is to obtain a process for producing a connecting rod according to any one of claims 1 to 9 for an internal combustion engine that reduces the drawbacks of the prior art.

According to the present invention, a process for producing a connecting rod for an internal combustion engine is provided; the production process comprises a step of obtaining at least a small end and a shank assembly of a connecting rod as an enbloc via an additive manufacturing process, preferably of the laser or electron-beam powder-bed type or of the laser or electron-beam powder-jet type, comprising the step of obtaining the small end, the shank assembly, and at least one portion of the big end as an enbloc via the additive manufacturing process, preferably of the laser or electron-beam powder-bed type or of the laser or electron-beam powder-jet type; the process comprises the step of obtaining another portion of the big end, which defines a cap, in a piece separate from the enbloc via the additive manufacturing process or a process of fusion or forging, and subsequently fixing it to the enbloc.

According to another preferred embodiment of the present invention, the step of obtaining the small end, the shank assembly and at least one portion of the big end comprises obtaining through channels from the portion of the big end to the small end, passing through the shank assembly, simultaneously with production of the enbloc via additive manufacturing.

### BRIEF DESCRIPTION OF THE DRAWINGS

Further characteristics and advantages of the present invention will become clear from the following description of a non-limiting example thereof, with reference to the figures of the appended drawings, wherein:
- Figure 1 is a top view of a connecting rod for an internal combustion engine obtained according to the present invention;
- Figure 2 is a side view of the connecting rod of Figure 1;
- Figure 3 is a section view according to plane III-III of Figure 1; and
- Figure 4 is a section view according to plane IV-IV of Figure 2.

### BEST MODE FOR CARRYING OUT THE INVENTION

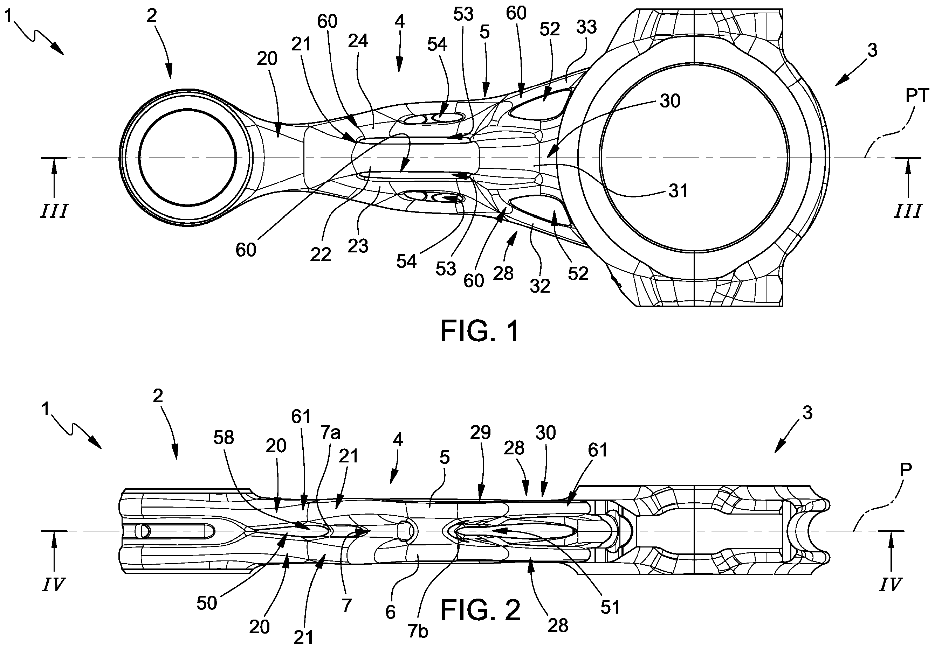

With reference to Figure 1, the number 1 indicates a connecting rod for an internal combustion engine.

The internal combustion engine (not shown in the appended Figures) comprises, *inter alia,* a cylinder, inside which a piston is housed, a connecting rod/crank system and a drive shaft (not shown in the appended Figures).

The connecting rod/crank system comprises a connecting rod and a crank (not shown in the appended Figures) connected together. In addition, the crank is connected to the drive shaft and the connecting rod is connected to the piston.

The connecting rod 1 comprises a small end 2, a big end 3 and a shank assembly 4 which connects the small end 2 to the big end 3 and develops between the small end 2 and the big end 3.

According to the process of the invention, the shank assembly 4, the small end 2 and at least one portion of the big end 3 are obtained as an enbloc via the additive manufacturing process, preferably of the laser or electron-beam powder-bed type or of the laser or electron-beam powder-jet type. The other portion of the big end 3 is obtained as a piece separate from the enbloc via an additive manufacturing process, preferably of the laser or electron-beam powder-bed type or of the laser or electron-beam powder-jet type, or via a process of fusion or forging, and subsequently fixed to the enbloc.

In use, the big end 3 of the connecting rod 1 is connected to the crank and the small end 2 of the connecting rod 1 is connected to the piston.

The shank assembly 4 comprises a shank 5 and a shank 6, which are preferably symmetrical with respect to a reference plane (P) that extends from the small end (2) to the big end 3.

The reference plane P defines a median plane of the small end 2 and the big end 3.

The reference plane P is perpendicular to the axes of the through connection openings, in particular of the connection holes, of the small end 2 and the big end 3. In particular, the through connection opening of the small end 2 is connected to the piston of the internal combustion engine and the through connection opening of the big end 3 is connected to the crank.

According to the invention, the reference plane P defines a median plane of the connecting rod 1.

With reference to Figure 2, the shanks 5 and 6 are housed prevalently in a respective plane that is parallel to the reference plane P.

The shank assembly 4 comprises a branch assembly 7 that connects the shank 5 and the shank 6 together and extends in a direction transverse to the reference plane P.

The shanks 5 and 6 are in contact via the branch assembly 7 at least in a point P1 interposed in a position different from the points where the shanks 5 and 6 are in contact with the small end 2 and with the big end 3.

The connecting rod 1 comprises at least one lubrication duct, 10 and 11, for each shank, 5 and 6.

The lubrication ducts 10 and 11 are obtained in the shanks 5 and 6, respectively, and traverses them from the small end 2 to the big end 3.

In one embodiment illustrated in Figure 1, the lubrication ducts 10 and 11 pass through the central portion 22 of the respective shanks 5 and 6.

In another embodiment not illustrated in the appended Figures, the at least lubrication ducts 10 and 11 pass through at least one of the side portions 23 and/or 24 of the respective shanks 5 and 6. In particular, in a preferred but not limiting embodiment of the present invention, for each shank 5 and 6 the connecting rod 1 comprises two lubrication ducts, wherein one of the two passes through a side portion 23 and the other one passes through a side portion 24 of said shanks 5, 6.

The lubrication ducts 10, 11 are obtained during the manufacture of the connecting rod jointly with a step of forming of the connecting rod 1, in particular being obtained jointly with production of the shank assembly during the additive manufacturing process.

Each shank 5 and 6 comprises a first portion 20 and a second portion 21.

Each first portion 20 is defined by a single body and is connected on one side to the small end 2 and on the other side to the second portion 21.

Each second portion 21 comprises three parts, in particular a central part 22 and two outer parts 23 and 24 arranged on opposite sides with respect to the central part 22.

The central part 22 of the first shank 5 and the central part 22 of shank 6 are connected together along a portion PP1 of the reference plane P.

Each outer part of the shank 5 is in contact with the respective outer part of the shank 6 along a second portion PP2 of the reference plane P which has an extension smaller than the first portion PP1 of the reference plane P, preferably the first portion PP1 and the second portion PP2 of the reference plane P at least partially overlap.

Each outer part 23, 24 of the first shank 5 joined, preferably connected and in contact, to the respective outer part 23, 24 of the second shank 6 divides into two parts along a third portion PP3 of the reference plane P which has an extension smaller than the second portion PP2 of the reference plane P and preferably overlap to it.

Each shank 5 and 6 of the shank assembly 4 comprises a third portion 28 comprising a first sub-portion 29, which is formed by a single body; and a second sub-portion 30, which comprises a central body 31 and two branchings 32 and 33.

The central body 31 and the two branchings 32, 33 are connected on one side to the single body 31 and on the other side to the big end 3 of the connecting rod 1.

In a preferred embodiment illustrated in Figure 2, the portions 28 of the shanks 5 and 6 are separate from one another.

With reference to the appended Figures, the shank 5 and the shank 6 comprise a plurality of openings.

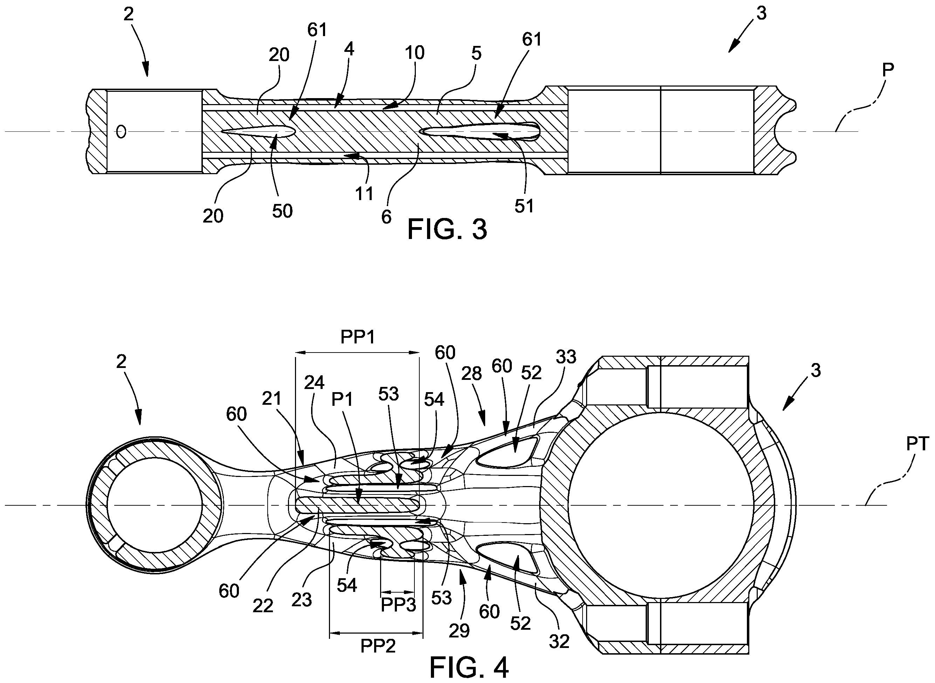

With reference to Figures 2 and 3, an opening 50 of the plurality of openings is delimited by the portion 20 of the shank 5, by the portion 20 of the shank 6, by the small end 2 and the branch assembly 7, in particular by a branch 7a of the branch assembly 7 joining the portion 22 of the shank 5 to the portion 22 of the shank 6. In particular, the portions 20 of the shanks 5 and 6 define the larger sides of the opening 50.

Still with reference to Figures 2 and 3, an opening 51 of the plurality of openings is delimited by the portion 28 of the shank 5, by the portion 28 of the shank 6, by the big end 3 and by the branch assembly 7, in particular by a branch 7b of the branch assembly 7 joining the portion 28 of the shank 5 to the portion 28 of the shank 6. In particular, the portions 28 of the shanks 5 and 6 define the larger sides of opening 51.

With reference to Figures 1 and 2, the plurality of openings comprise openings obtained in the shank 5 and openings obtained in the shank 6 independent of one other. In particular, each shank 5 and 6 comprises a pair of openings 52, a pair of openings 53, a pair of openings 54, and a pair of openings 55.

The openings of one same pair of openings 52, 53, 54, 55, and 56 are mutually symmetrical with respect to a plane PT perpendicular to the reference plane P.

The openings 53 are defined by the respective portion 22 of the respective shank 5 or 6, by one of the portions 23 or 24 of the respective shank 5 or 6, by the respective single body 20, and the respective portion 28; in particular the respective portion 22 and the respective portion 23 or 24 define the larger sides of said opening 53.

The openings 52 are defined by the respective central body 31 of the respective shank 5 or 6, one of the branchings 32 or 33 of the respective shank 5 or 6, the third portion 28, and the big end 3; in particular the central body 31 and one of the branchings 32 or 33 define the larger sides of said opening 52.

The openings 54 are obtained in the outer parts 23 or 24 of the second portion 21.

In addition, the connecting rod comprises a plurality of openings 58 obtained in the shank assembly between the shank 5 and the shank 6 which develop in length along the plane P.

With reference to the appended Figures, each shank 5 and 6 define a plurality of structures 60, each of which has a closed section. In particular, each shank 5 and 6 defines a structure 60 that encloses within it a plurality of other structures 60.

In addition, the shanks 5 and 6 together define structures 61, each of which has a closed section, and wherein the structures 60 lie in planes perpendicular to the planes in which the structures 61 lie.

In a preferred but not limiting embodiment of the present invention, which is not illustrated in the appended Figures, the lubrication ducts have a non-rectilinear and tortuous shape and comprise curved portions.

In a preferred but not limiting embodiment of the present invention, which is not illustrated in the appended Figures, grooves formed directly during the process, in particular during the forming step in additive manufacturing, are obtained inside the annular cavities of the big end and the small end.

In a preferred but not limiting embodiment of the present invention, the big end comprises holes configured to receive closing screws, said holes being obtained during the forming step in additive manufacturing.

In a preferred but not limiting embodiment of the present invention, which is not illustrated in the appended Figures, the connecting rod comprises a bearing inserted in the small end which is obtained during the forming step in additive manufacturing via deposition of a low friction layer.

As mentioned above, the connecting rod 1 is obtained via an additive manufacturing process. As mentioned above, the step of obtaining the small end, the shank assembly and at least one portion of the big end comprises obtaining the ducts 10 and 11, passing from the big end 3 to the small end 2 by traversing the shank assembly 4, jointly with production of the enbloc via additive manufacturing.

The process for producing the connecting rod 1 provides the steps of:
a) obtaining a design having the profiles of the small end 2, the shank assembly 4 and a portion of the big end 3;
b) obtaining the connecting rod 1 via said additive manufacturing tool for metals.

It is finally apparent that modifications and variations can be made to the above described embodiments without departing from the scope defined by the appended claims.

## Claims

1. A connecting rod for an internal combustion engine; the connecting rod (1) comprising a small end (2), a big end (3), and a shank assembly (4), which connects the small end (2) to the big end (3) and develops between the small end (2) and the big end (3); wherein the shank assembly (4) comprises a first shank (5) and a second shank (6), which are preferably symmetrical with respect to a reference plane (P) that extends from the small end (2) to the big end (3), wherein the reference plane (P)is a median plane of the connecting rod (1); the first and the second shanks (5, 6) are housed prevalently in a respective plane that is parallel to the reference plane (P); the shank assembly (4) comprises a branch assembly (7), which connects the first and the second shanks (5, 6) together and extends in a direction transverse to the plane (P); the first and the second shanks (5, 6) are in contact via the branch assembly (7) at least in a point (P1) interposed in a position different from the points where the first and the second shanks (5, 6) are in contact with the small end (2) and with the big end (3); wherein each first and second shank (5, 6) comprise a first and a second portion (20, 21), the first portion (20) is defined by a single body and is connected on one side to the small end (2) and on the other side to the second portion (21); the connecting road being **characterized in that** each second portion (21) comprises three parts, namely two outer parts (23, 24) and one central part (22), which are connected on one side to the first portion (20); the central parts (22) of the first shank (5) and of the second shank (6) are connected together along a first portion (PP1) of the plane (P) .

2. The connecting rod according to Claim 1, wherein at least the shank assembly (4) and the small end (2) are obtained as an enbloc via an additive manufacturing process, preferably of the laser or electron-beam powder-bed type or of the laser or electron-beam powder-jet type.

3. The connecting rod according to Claim 1 or 2, wherein the connecting rod (1) comprises at least one lubrication and/or cooling duct (10, 11) for the first shank (5) and/or for the second shank (6); the at least one lubrication duct (10, 11) is obtained, respectively, in the first and/or in the second shank (5, 6) and traverses it from the small end (2) to the big end (3); preferably, the at least one lubrication duct (10, 11) being obtained during the manufacture of the connecting rod jointly with a step of forming of the connecting rod (1), in particular being obtained jointly with production of the shank assembly (4) during the additive manufacturing process; preferably, the connecting rod comprises at least one lubrication and/or cooling duct (10) for the first shank (5) and at least one other lubrication and/or cooling duct (11) for the second shank (6); preferably, the duct can have a rectilinear shape or a tortuous shape.

4. The connecting rod according to Claim 1, wherein each outer part (23, 24) of the first shank (5) is joined, preferably connected in contact, to the respective outer part (23, 24) of the second shank (6) along a second portion (PP2) of the plane (P) having a dimension smaller than the first portion (PP1) of the plane, preferably, the first and second portions (PP1, PP2) of the plane (P) partially overlap.

5. The connecting rod according to Claim 1 or 4, wherein each outer part (23, 24) of the first shank (5), joined, preferably connected and in contact, to the respective outer part of the second shank (6), divides into two parts along a third portion (PP3) of the plane, which has an dimension smaller than the second portion (PP2) of the plane and preferably overlaps to it.

6. The connecting rod according to any one of Claims 1 to 5, wherein each first and second shank (5, 6) comprise a third portion (28) comprising a first sub-portion (29), which is formed by a single body; and a second sub-portion (30), which comprises a central body (31) and two branchings (32, 33); and wherein the central body (31) and the two branchings (32, 33) are connected on one side to the single body (31) and on the other side to the big end (3) of the connecting rod (1); wherein preferably the third portions (28) of the first and second shanks (5, 6) are separate from one another.

7. The connecting rod according to any one of the preceding claims, wherein the first and/or the second shank (5, 6) comprise(s) a plurality of openings (50, 52, 53, and 54) obtained in the first shank (5) and openings obtained in the second shank (6) that are independent of one another; preferably, each shank (5, 6) comprises a first pair of openings (52), a second pair of openings (53), and a third pair of openings (54) of the plurality of openings; wherein the openings of one same pair of openings (52, 53, 54, 55 and 56) are mutually symmetrical with respect to a plane (PT) perpendicular to the reference plane (P).

8. The connecting rod according to any one of the preceding claims, wherein the shank assembly (4) comprises a plurality of openings (51) defined between the first and the second shanks (5, 6), which develop in length along the plane (P).

9. The connecting rod according to any one of the preceding claims, wherein each first and second shank (5, 6) define first structures (60) having a closed section; in particular, each first and second shank (5, 6) have a first closed structure (60) that encloses within it a plurality of other first closed structures (60); preferably, the first and second shank (5, 6) together define second structures (61) having a closed section; wherein the first structures (60) lie in planes perpendicular to the planes in which the second structures (61) lie.

10. An internal combustion engine comprising: a cylinder; a piston housed within the cylinder; a connecting rod/crank system; and a drive shaft; the connecting rod/crank system comprising a connecting rod (1) and a crank connected together, the crank being connected to the drive shaft, and the connecting rod being connected to the piston, the connecting rod (1) being obtained according to any one of Claims 1 to 9.

11. A process for producing a connecting rod according to any one of claims 1 to 9 for an internal combustion engine, wherein the production process comprises a step of obtaining at least a small end (2) and a shank assembly (4) of a connecting rod (1) as an enbloc via an additive manufacturing process, preferably of the laser or electron-beam powder-bed type or of the laser or electron-beam powder-jet type, comprising the step of obtaining the small end (2), the shank assembly (4), and at least one portion of the big end (3) as an enbloc via the additive manufacturing process, preferably of the laser or electron-beam powder-bed type or of the laser or electron-beam powder-jet type; wherein
the process comprising the step of obtaining another portion of the big end (3) in a piece separate from the enbloc via the additive manufacturing process or a process of fusion or forging, and subsequently fixing it to the enbloc.

12. The production process according to Claim 11, wherein the step of obtaining the small end (2), the shank assembly (4), and at least one portion of the big end (3) comprises obtaining through channels (10) from the portion of the big end (3) to the small end (2), which pass through the shank assembly (4), simultaneously with production of the enbloc via additive manufacturing.

## Patentansprüche

1. Pleuelstange für einen Verbrennungsmotor, wobei die Pleuelstange (1) ein kleines Ende (2), ein großes Ende (3) und eine Schaftanordnung (4) aufweist, die das kleine Ende (2) mit dem großen Ende (3) verbindet und zwischen dem kleinen Ende (2) und dem großen Ende (3) verläuft, wobei die Schaftanordnung (4) einen ersten Schaft (5) und einen zweiten Schaft (6) aufweist, die vorzugsweise in Bezug auf eine Bezugsebene (P), die sich vom kleinen Ende (2) zum großen Ende (3) erstreckt, symmetrisch sind, wobei die Bezugsebene (P) eine Mittelebene der Pleuelstange (1) ist, der erste und der zweite Schaft (5, 6) vorzugsweise in einer jeweiligen Ebene liegen, die parallel zur Bezugsebene (P) verläuft, die Schaftanordnung (4) eine Verzweigungsanordnung (7) aufweist, die den ersten und den zweiten Schaft (5, 6) miteinander verbindet und sich in einer Richtung quer zur Ebene (P) erstreckt, der erste und der zweite Schaft (5, 6) über die Verzweigungsanordnung (7) zumindest in einem Punkt (P1) in Kontakt stehen, der an einer Position angeordnet ist, die sich von den Punkten unterscheidet, an denen der erste und der zweite Schaft (5, 6) mit dem kleinen Ende (2) und mit dem großen Ende (3) in Kontakt stehen, wobei der erste und der zweite Schaft (5, 6) jeweils einen ersten und einen zweiten Abschnitt (20, 21) aufweisen, wobei der erste Abschnitt (20) durch einen einzigen Körper definiert ist und auf einer Seite mit dem kleinen Ende (2) und auf der anderen Seite mit dem zweiten Abschnitt (21) verbunden ist,
wobei die Pleuelstange **dadurch gekennzeichnet ist, dass** jeder zweite Abschnitt (21) drei Teile aufweist, nämlich zwei äußere Teile (23, 24) und einen mittleren Teil (22), die auf einer Seite mit dem ersten Abschnitt (20) verbunden sind, wobei die mittleren Teile (22) des ersten Schafts (5) und des zweiten Schafts (6) entlang eines ersten Abschnitts (PP1) der Ebene (P) miteinander verbunden sind.

2. Pleuelstange nach Anspruch 1, wobei zumindest die Schaftanordnung (4) und das kleine Ende (2) als Block durch ein additives Fertigungsverfahren, vorzugsweise vom Laser- oder Elektronenstrahl-Pulverbett-Typ oder vom Laser- oder Elektronenstrahl-Pulverstrahl-Typ, hergestellt sind.

3. Pleuelstange nach Anspruch 1 oder 2, wobei die Pleuelstange (1) mindestens einen Schmier- und/oder Kühlkanal (10, 11 ) für den ersten Schaft (5) und/oder für den zweiten Schaft (6) aufweist, wobei der mindestens eine Schmierkanal (10, 11) im ersten und/oder im zweiten Schaft (5, 6) ausgebildet ist und diesen vom kleinen Ende (2) bis zum großen Ende (3) durchläuft, wobei der mindestens eine Schmierkanal (10, 11) vorzugsweise bei der Herstellung der Pleuelstange gemeinsam mit einem Schritt zum Ausbilden der Pleuelstange (1) ausgebildet wird, insbesondere gemeinsam mit der Herstellung der Schaftanordnung (4) während des additiven Fertigungsverfahrens ausgebildet wird, wobei die Pleuelstange vorzugsweise mindestens einen Schmier- und/oder Kühlkanal (10) für den ersten Schaft (5) und mindestens einen weiteren Schmier- und/oder Kühlkanal (11) für den zweiten Schaft (6) aufweist, wobei der Kanal vorzugsweise eine geradlinige Form oder eine gewundene Form aufweist.

4. Pleuelstange nach Anspruch 1, wobei jeder äußere Teil (23, 24) des ersten Schafts (5) mit dem jeweiligen äußeren Teil (23, 24) des zweiten Schafts (6) entlang eines zweiten Abschnitts (PP2) der Ebene (P) verbunden, vorzugsweise in Kontakt verbunden ist, der eine kleinere Abmessung als der erste Abschnitt (PP1) der Ebene hat, wobei sich der erste und der zweite Abschnitt (PP1, PP2) der Ebene (P) vorzugsweise teilweise überlappen.

5. Pleuelstange nach Anspruch 1 oder 4, wobei jeder äußere Teil (23, 24) des ersten Schafts (5), der mit dem jeweiligen äußeren Teil des zweiten Schafts (6) verbunden ist, vorzugsweise in Kontakt verbunden ist, sich entlang eines dritten Abschnitts (PP3) der Ebene, der eine kleinere Abmessung als der zweite Abschnitt (PP2) der Ebene aufweist und diesen vorzugsweise überlappt, in zwei Teile teilt.

6. Pleuelstange nach einem der Ansprüche 1 bis 5, wobei der erste und der zweite Schaft (5, 6) jeweils einen dritten Abschnitt (28) aufweisen, der einen ersten Teilabschnitt (29), der durch einen einzelnen Körper gebildet ist, und einen zweiten Teilabschnitt (30) aufweist, der einen mittigen Körper (31) und zwei Verzweigungen (32, 33) aufweist, und wobei der mittige Körper (31) und die beiden Verzweigungen (32, 33) auf einer Seite mit dem einzelnen Körper (31) und auf der anderen Seite mit dem großen Ende (3) der Pleuelstange (1) verbunden sind, wobei vorzugsweise die dritten Abschnitte (28) des ersten und des zweiten Schafts (5, 6) voneinander getrennt sind.

7. Pleuelstange nach einem der vorhergehenden Ansprüche, wobei der erste und/oder der zweite Schaft (5, 6) eine Vielzahl von Öffnungen (50, 52, 53 und 54), die im ersten Schaft (5) ausgebildet sind, und Öffnungen aufweisen, die im zweiten Schaft (6) ausgebildet sind, die unabhängig voneinander sind, wobei vorzugsweise jeder Schaft (5, 6) ein erstes Paar von Öffnungen (52), ein zweites Paar von Öffnungen (53) und ein drittes Paar von Öffnungen (54) der Vielzahl von Öffnungen aufweist, wobei die Öffnungen eines gleichen Paars von Öffnungen (52, 53, 54, 55 und 56) in Bezug auf eine sich senkrecht zur Bezugsebene (P) erstreckende Ebene (PT) symmetrisch zueinander sind.

8. Pleuelstange nach einem der vorangehenden Ansprüche, wobei die Schaftanordnung (4) eine Vielzahl von Öffnungen (51) aufweist, die zwischen dem ersten und dem zweiten Schaft (5, 6) definiert sind und sich entlang der Ebene (P) erstrecken.

9. Pleuelstange nach einem der vorangehenden Ansprüche, wobei der erste und der zweite Schaft (5, 6) jeweils erste Strukturen (60) mit einem geschlossenen Querschnitt definieren, wobei insbesondere der erste und der zweite Schaft (5, 6) jeweils eine erste geschlossene Struktur (60) aufweisen, die in sich eine Vielzahl anderer erster geschlossener Strukturen (60) einschließt, wobei vorzugsweise der erste und der zweite Schaft (5, 6) gemeinsam zweite Strukturen (61) mit einem geschlossenen Querschnitt definieren, wobei die ersten Strukturen (60) in Ebenen liegen, die sich senkrecht zu den Ebenen erstrecken, in denen die zweiten Strukturen (61) liegen.

10. Verbrennungsmotor mit:
einem Zylinder;
einem im Zylinder aufgenommenen Kolben;
einem Pleuelstange-/Kurbelwelle-System; und
einer Antriebswelle,
wobei das Pleuelstange-/Kurbelwelle-System eine Pleuelstange (1) und eine Kurbelwelle aufweist, die miteinander verbunden sind, wobei die Kurbelwelle mit der Antriebswelle verbunden ist und die Pleuelstange mit dem Kolben verbunden ist, wobei die Pleuelstange (1) nach einem der Ansprüche 1 bis 9 konfiguriert ist.

11. Verfahren zum Herstellen einer Pleuelstange nach einem der Ansprüche 1 bis 9 für einen Verbrennungsmotor, wobei das Herstellungsverfahren einen Schritt zum Ausbilden mindestens eines kleinen Endes (2) und einer Schaftanordnung (4) einer Pleuelstange (1) als ein Block durch ein additives Fertigungsverfahren, vorzugsweise vom Laser- oder Elektronenstrahl-Pulverbett-Typ oder vom Laser- oder Elektronenstrahl-Pulverstrahl-Typ, aufweist, mit dem Schritt zum Ausbilden des kleinen Endes (2), der Schaftanordnung (4) und mindestens eines Teils des großen Endes (3) als einen Block durch das additive Fertigungsverfahren, vorzugsweise vom Laser- oder Elektronenstrahl-Pulverbett-Typ oder vom Laser- oder Elektronenstrahl-Pulverstrahl-Typ,
wobei das Verfahren den Schritt zum Ausbilden eines anderen Teils des großen Endes (3) in einem von dem Block getrennten Stück durch das additive Fertigungsverfahren oder ein Schmelz- oder Schmiedeverfahren und zum anschließenden Befestigen an dem Block aufweist.

12. Herstellungsverfahren nach Anspruch 11, wobei der Schritt zum Ausbilden des kleinen Endes (2), der Schaftanordnung (4) und mindestens eines Teils des großen Endes (3) das Ausbilden von Durchgangskanälen (10) von dem Teil des großen Endes (3) zu dem kleinen Ende (2), die sich durch die Schaftanordnung (4) erstrecken, gleichzeitig mit dem Herstellen des Blocks durch das additive Fertigungsverfahren aufweist.

## Revendications

1. Bielle pour un moteur à combustion interne ; la bielle (1) comprenant une petite extrémité (2), une grande extrémité (3) et un ensemble de tiges (4) qui raccorde la petite extrémité (2) à la grande extrémité (3) et se développe entre la petite extrémité (2) et la grande extrémité (3) ; dans laquelle l'ensemble de tiges (4) comprend une première tige (5) et une seconde tige (6) qui sont de préférence symétriques par rapport à un plan de référence (P) qui s'étend de la petite extrémité (2) à la grande extrémité (3), dans laquelle le plan de référence (P) est un plan médian de la bielle (1) ; la première et la seconde tige (5, 6) sont logées de manière prédominante dans un plan respectif qui est parallèle au plan de référence (P) ; l'ensemble de tiges (4) comprend un ensemble de branche (7) qui raccorde la première et la seconde tige (5, 6) ensemble et s'étend dans une direction transversale par rapport au plan (P) ; la première et la seconde tige (5, 6) sont en contact avec l'ensemble de branche (7) au moins à un point (P1) intercalé dans une position différente des points où la première et la seconde tige (5, 6) sont en contact avec la petite extrémité (2) et avec la grande extrémité (3) ; dans laquelle chaque première et seconde tige (5, 6) comprend une première et une deuxième partie (20, 21), la première partie (20) est définie par un corps unique et est raccordée, d'un côté, à la petite extrémité (2) et de l'autre côté à la deuxième partie (21) ; la bielle étant **caractérisée en ce que** chaque deuxième partie (21) comprend trois pièces, c'est-à-dire deux pièces externes (23, 24) et une pièce centrale (22) qui sont raccordées d'un côté à la première partie (20) ; les pièces centrales (22) de la première tige (5) et de la seconde tige (6) sont raccordées ensemble le long d'une première partie (PP1) du plan (P).

2. Bielle selon la revendication 1, dans laquelle au moins l'ensemble de tiges (4) et la petite extrémité (2) sont obtenues sous la forme d'un monobloc via un procédé de fabrication additive, de préférence de type à lit de poudre laser ou faisceau électronique ou de type à jet de poudre laser ou faisceau électronique.

3. Bielle selon la revendication 1 ou 2, dans laquelle la bielle (1) comprend au moins un conduit de lubrification et/ou refroidissement (10, 11) pour la première tige (5) et/ou pour la seconde tige (6) ; le au moins un conduit de lubrification (10, 11) est obtenu, respectivement, dans la première et/ou la seconde tige (5, 6) et la traverse de la petite extrémité (2) à la grande extrémité (3) ; de préférence, le au moins un conduit de lubrification (10, 11) étant obtenu pendant la fabrication de la bielle conjointement avec une étape pour former la bielle (1), en particulier étant obtenu conjointement avec la production de l'ensemble de tiges (4) pendant le procédé de fabrication additive ; de préférence la bielle comprend au moins un conduit de lubrification et/ou de refroidissement (10) pour la première tige (5) et au moins un autre conduit de lubrification et/ou de refroidissement (11) pour la seconde tige (6) ; de préférence, le conduit peut avoir une forme rectiligne ou une forme tortueuse.

4. Bielle selon la revendication 1, dans laquelle chaque pièce externe (23, 24) de la première tige (5) est assemblée, de préférence raccordée en contact, à la pièce externe (23, 24) respective de la seconde tige (6) le long d'une deuxième partie (PP2) du plan (P) ayant une dimension inférieure à la première partie (PP1) du plan, de préférence, les première et deuxième parties (PP1, PP2) du plan (P) se chevauchent partiellement.

5. Bielle selon la revendication 1 ou 4, dans laquelle chaque pièce externe (23, 24) de la première tige (5), assemblée, de préférence raccordée et en contact avec la pièce externe respective de la seconde tige (6), se divise en deux pièces le long d'une troisième partie (PP3) du plan, qui a une dimension inférieure à la deuxième partie (PP2) du plan et la chevauche de préférence.

6. Bielle selon l'une quelconque des revendications 1 à 5, dans laquelle chaque première et seconde tige (5, 6) comprend une troisième partie (28) comprenant une première partie secondaire (29) qui est formée par un corps unique ; et une seconde partie secondaire (30) qui comprend un corps central (31) et deux branchements (32, 33) ; et dans laquelle le corps central (31) et les deux branchements (32, 33) sont raccordés d'un côté au corps unique (31) et de l'autre côté à la grande extrémité (3) de la bielle (1) ; dans laquelle de préférence les troisièmes parties (28) des première et seconde tiges (5, 6) sont séparées les unes des autres.

7. Bielle selon l'une quelconque des revendications précédentes, dans laquelle la première et/ou la seconde tige (5, 6) comprend (comprennent) une pluralité d'ouvertures (50, 52, 53 et 54) obtenues dans la première tige (5) et des ouvertures obtenues dans la seconde tige (6) qui sont indépendantes l'une de l'autre ; de préférence chaque tige (5, 6) comprend une première paire d'ouvertures (52), une deuxième paire d'ouvertures (53) et une troisième paire d'ouvertures (54) de la pluralité d'ouvertures ; dans laquelle les ouvertures d'une même paire d'ouvertures (52, 53, 54, 55 et 56) sont mutuellement symétriques par rapport à un plan (PT) perpendiculaire au plan de référence (P).

8. Bielle selon l'une quelconque des revendications précédentes, dans laquelle l'ensemble de tiges (4) comprend une pluralité d'ouvertures (51) définies entre les première et seconde tiges (5, 6) qui se développent en longueur le long du plan (P).

9. Bielle selon l'une quelconque des revendications précédentes, dans laquelle chaque première et chaque seconde tige (5, 6) définissent des premières structures (60) ayant une section fermée ; en particulier chaque première et chaque seconde tige (5, 6) ont une première structure fermée (60) qui enferme une pluralité d'autres premières structures fermées (60) ; de préférence, les première et seconde tiges (5, 6) définissent ensemble des secondes structures (61) ayant une section fermée ; dans laquelle les premières structures (60) se trouvent dans des plans perpendiculaires aux plans dans lesquels les secondes structures (61) se trouvent.

10. Moteur à combustion interne comprenant : un cylindre ; un piston logé dans le cylindre ; un système de bielle / manivelle ; et un arbre d'entraînement ; le système de bielle / manivelle comprenant une bielle (1) et une manivelle raccordées ensemble, la manivelle étant raccordée à l'arbre d'entraînement, et la bielle étant raccordée au piston, la bielle (1) étant obtenue selon l'une quelconque des revendications 1 à 9.

11. Procédé pour produire une bielle selon l'une quelconque des revendications 1 à 9 pour un moteur à combustion interne, dans lequel le procédé de production comprend une étape pour obtenir au moins une petite extrémité (2) et un ensemble de tiges (4) d'une bielle (1) sous une forme monobloc via un procédé de fabrication additive, de préférence de type à lit de poudre laser ou faisceau électronique ou du type à jet de poudre laser ou faisceau électronique, comprenant l'étape d'obtention de la petite extrémité (2), de l'ensemble de tiges (4) et d'au moins une partie de la grande extrémité (3) sous une forme monobloc via le procédé de fabrication additive, de préférence du type à lit de poudre laser ou faisceau électronique ou de type à jet de poudre laser ou faisceau électronique ; dans lequel :
le procédé comprenant l'étape d'obtention d'une autre partie de la grande extrémité (3) dans une pièce séparée du monobloc via le procédé de fabrication additive ou un procédé de fusion ou de forgeage, puis sa fixation au monobloc.

12. Procédé de production selon la revendication 11, dans lequel l'étape d'obtention de la petite extrémité (2), de l'ensemble de tiges (4) et d'au moins une partie de la grande extrémité (3) comprend l'étape d'obtention des canaux débouchants (10) de la partie de la grande extrémité (3) à la petite extrémité (2) qui passent à travers l'ensemble de tiges (4), simultanément avec la production du monobloc via la fabrication additive.
